# EUROPÄISCHE PATENTSCHRIFT

(11) **EP 1 750 104 B1**
(45) Veröffentlichungstag und Bekanntmachung des Hinweises auf die Patenterteilung: **28.12.2011**
(21) Anmeldenummer: 06010806.5
(22) Anmeldetag: 26.05.2006
(51) Int. Cl.: G01F 23/296, B06B 1/02

(54) **Vorrichtung und Verfahren zur Vibrations-Füllstand-Grenzstanderfassung**
Device and method for vibratory limit level determination
Dispositif et procédé destinés à l'enregistrement d'un niveau seuil de remplissage à vibrations

(30) Priorität: 02.08.2005 DE 102005036872
(43) Veröffentlichungstag der Anmeldung: 07.02.2007
(73) Patentinhaber: VEGA Grieshaber KG, 77761 Schiltach (DE)
(72) Erfinder: Wöhrle, Siegbert, 77761 Schiltach (DE)
(74) Vertreter: Patentanwälte Westphal, Mussgnug & Partner

(56) Entgegenhaltungen:
- WO-A-2004/055485
- DE-A1- 19 548 041
- GB-A- 1 095 436

## Beschreibung

Die Erfindung bezieht sich auf eine Vorrichtung zur Vibrations-Grenzstanderfassung von Flüssigkeiten mit den oberbegrifflichen Merkmalen des Patentanspruchs 1 bzw. auf ein Verfahren zum Betreiben einer solchen Vorrichtung.

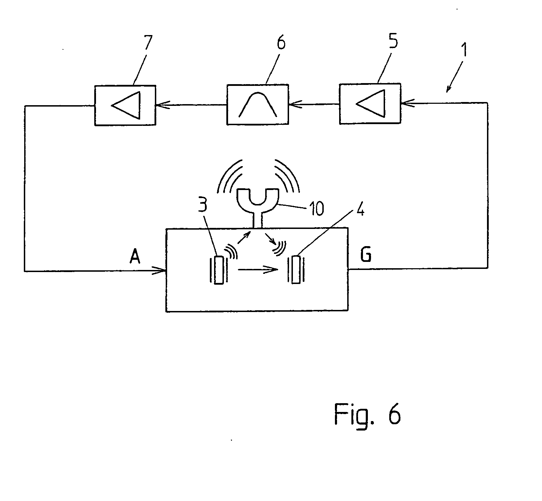

Vibrations-Füllstand-Grenzstandschalter 1, welche als Vorrichtung zur Detektion von Flüssigkeiten eingesetzt werden, sind Vibrationsresonatoren, üblicherweise Gabelschwinger mit piezoelektrischen Antriebssystemen, wie dies in Fig. 6 skizziert ist. Diese enthalten üblicherweise ein sendendes Piezoelement 3, das eine als Gabel 10 ausgebildetes mechanisches Schwingelement zur Schwingung anregt, und ein weiteres, empfangendes Piezoelement 4, welches eine Schwingung der Gabel 10 detektiert. Mittels einer Schaltung, welche üblicherweise einen Verstärker 5, ein Filter 6 und einen Komparator 7 aufweist, wird das detektierte Signal so verstärkt und die Phasenlage des Signals so verschoben, dass die Schwingbedingung für das System erfüllt ist.

DE 196 21 449 C2 beschreibt einen Vibrations-Füllstand-Grenzschalter mit einem Vibrationsresonator. Zum Antrieb und zur Detektion des Vibrationsresoriators wird nur ein Piezoelement verwendet, das über eine Zweidrahtleitung angeschlossen ist. Bei dieser Anordnung erfolgen Erregung und Detektion der Schwingung durch dieses eine Piezoelement. Um dies zu erreichen, muss eine Spannung, die durch einen Piezo-Umladestrom entsteht, ausgetastet werden. Die Piezo-Kapazität steigt bei einer Temperatur von 280°C gegenüber Raumtemperatur um das 3-fache. Nachteil dieses Verfahrens ist daher, dass bei großen Umlade-Kapazitäten, wie sie durch hohe Temperaturen, oder bei langen zuleitungen entstehen, die Austastlücke so lang wird, dass das Verfahren nicht mehr oder nur sehr eingeschränkt angewendet werden kann.

WO 2004/055485 A2 beschreibt ebenfalls einen Vibrations-Füllstand-Grenzschalter mit einem Vibrationsresonator mit einem über eine Zweidrahtleitung angeschlossenen Piezoelement, bei dem Erregung und Detektion der Schwingung durch das besagte Piezoelement erfolgen. Zusätzlich verfügt dieser Vibrations-Füllstand-Grenzschalter über eine Peakkompensationseinheit zur Begrenzung des Umladestroms des Piezoantriebs.

GB-A-1 095 436 und DE 195 48 041 A1 offenbaren Treibervorrichtungen für piezoelektrische Oszillatoren mit Kompensationseinheiten, die einen Kompensationskompensator umfassen.

Die zu schaffende Vorrichtung bzw. Schaltung in einer Vorrichtung soll ebenso mit nur einem Piezoelement und einer zweidrahtleitung auskommen, aber im Gegensatz zum bisherigen Verfahren unabhängig sowohl von der Piezokapazität als auch von der Leitungskapazität arbeiten.

Außer den unten genannten erfindungsgemäßen Merkmalen umfasst die Erfindung die nachfolgenden Aspekte.

Eine Vorrichtung zur Vibrations-Füllstand-Grenzstanderfassung mit einem Vibrationsresonator, einem Piezoelement, das mit einer Piezokapazität behaftet ist, zum Anregen des Vibrationsresonators mit einer Antriebsfrequenz zu einer Schwingung und Erfassen einer Schwingung des Vibrationsresonators, zwei Anschluss-Leitern des Piezoelements und Schaltungskomponenten zum Auswerten einer durch das Piezoelement erfassten Schwingung des Vibrationsresonators, wobei ein Zweig mit einem Kompensationskondensator parallel zu einem Zweig mit dem Piezoelement geschaltet ist zum Kompensieren eines von der Piezokapazität abhängigen Umladestroms des Piezoelements.

Ein Verfahren zur Vibrations-Füllstand-Grenzstanderfassung, bei dem ein Piezoelement, das mit einer Piezokapazität behaftet ist, einen Vibrationsresonator mit einer Antriebsfrequenz zu einer Schwingung anregt und eine Schwingung des Vibrationsresonators erfasst, wobei mittels eines parallel zum Zweig mit dem Piezoelement geschalteten Zweigs mit einer Kompensationskapazität ein von der Piezokapazität abhängiger Umladestroms des Piezoelements kompensiert wird.

Der Umladestrom, der von der Piezokapazität und der Leitungskapazität abhängig ist, wird kompensiert, insbesondere vollständig kompensiert.

Eine Vorrichtung, bei welcher der Kompensationskondensator zum Kompensieren des von der Piezokapazität und zusätzlich einer Leitungskapazität des Piezoelements abhängigen Umladestroms ausgelegt ist.

Eine Vorrichtung, bei welcher der ein Inverter ein Signal, das von der Antriebsspannung für das Piezoelement abgeleitet ist, an den Kompensationskondensator anlegt.

Eine Vorrichtung, bei welcher eine Kapazität von exakt oder nahezu exakt der gleichen Größe wie eine Piezokapazität oder eine Piezo- und Leitungskapazität als Kompensationskondensator aufgeschaltet wird.

Eine Vorrichtung, bei welcher ein Abgriff zwischen dem Piezoelement und dem Kompensationskondensator angeordnet ist zum Abgreifen eines kompensierten Signals, das nur noch den Anteil der mechanischen Schwingung des Vibrationsresonators enthält.

Eine Vorrichtung, bei welcher der Kompensationskondensator oder die den Kompensationskondensator nachbildende elektronische Schaltung einen Steuereingang zum Einstellen der Kapazität hat.

Die Aufgabe der Erfindung ist, eine Vorrichtung und ein Verfahren mit einer Kompensationsregelung zu schaffen. Die Kompensationsregelung erfolgt mittels Kompensationskondensator oder mittels einer den Kompensationskondensator nachbildenden elektronischen Schaltung, an die eine geregelte Spannung anzulegen ist.

Diese Aufgabe wird durch die Vorrichtung bzw. das Verfahren mit den Merkmalen der unabhängigen Ansprüche gelöst.

Die Erfindung besteht aus einer solchen Vorrichtung, bei welcher ein Synchrongleichrichter abhängig vom Signal oder einer Spannung eines Punkts direkt zwischen dem Piezoelement und dem Kompensationskondensator ein Eingangssignal für die Kompensationsregelung gesteuert bereitstellt und ein Frequenzteiler zum Teilen der Antriebsfrequenz ein Steuersignal für den Synchrongleichrichter bereitstellt.

Das erfindungsgemäße Verfahren umfasst außer den erfindungsgemäßen Merkmalen die nachfolgenden Aspekte.

Ein Verfahren, bei welchem zusätzlich zu der Piezokapazität eine Leitungskapazität des Piezoelements kompensiert wird.

Ein Verfahren, bei welchem ein invertiertes Signal, das von der Antriebsspannung für das Piezoelement abgeleitet ist, an einen Kompensationskondensator mit der Kompersationskapazität angelegt wird.

Ein Verfahren, bei welchem eine Kompensationskapazität von exakt oder nahezu exakt der gleichen Größe wie der Piezokapazität oder einer Piezo- und Leitungskapazität als Kompensationskondensator aufgeschaltet wird.

Ein Verfahren, bei welchem zwischen dem Piezoelement und einem Kompensationskondensator mit der Kompensationskapazität ein kompensiertes Signal abgegriffen wird, das nur noch den Anteil der mechanischen Schwingung des Vibrationsresonators enthält.

Ein Verfahren, bei welchem eine Kapazität eines Kompensationskondensators oder eine den Kompensationskondensator nachbildende elektronische Schaltung variabel einstellbar und regelbar ist.

Ein Verfahren, bei welchem an einem Kompensationskondensator oder dessen Nachbildung eine geregelte Spannung angelegt wird.

Die Erfindung ist definiert durch ein Verfahren, bei welchem mittels eines Synchrongleichrichters abhängig vom Signal oder einer Spannung eines Punkts direkt zwischen dem Piezoelement und dem Kompensationskondensator ein Eingangssignal für die Kompensationsregelung gesteuert bereitgestellt wird und mittels eines Frequenzteilers zum Teilen der Antriebsfrequenz ein Steuersignal für den Synchrongleichrichter bereitgestellt wird.

Ein Ausführungsbeispiel wird nachfolgend anhand der Zeichnung näher erläutert. Es zeigen:
- Fig. 1: schematisch einen vibrations-Füllstand-Grenzschalter mit Schaltungskomponenten zu dessen Steuerung,
- Fig. 2: eine bevorzugte Schaltungsanordnung gemäß der Erfindung mit einem Vibrations-Füllstand-Grenzschalter,
- Fig. 3: eine bevorzugte praktische Schaltungsanordnung mit einem vibrations-Füllstand-Grenzachalter,
- Fig. 4: eine weitere bevorzugte praktische Schaltungsanordnung mit einem Vibrations-Füllstand-Grenzschalter,
- Fig. 5: Signalfolgen verschiedener Abgriffpunkte in einer solchen Schaltung und
- Fig. 6: einen bekannten Vibrations-Grenzstandschalter.

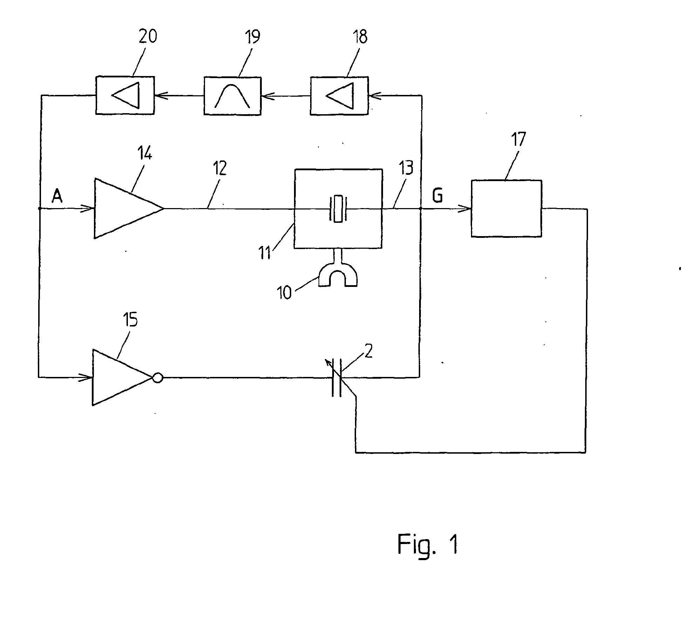

Fig. 1 zeigt schematisch einen Vibrations-Füllstand-Grenzschalter 1 mit Schaltungskomponenten zu dessen Steuerung als einer Vorrichtung zur Vibrations-Grenzstanderfassung von Flüssigkeiten. Zum Antreiben bzw. Versetzen eines Vibrationsresonators 10 in eine Schwingung und zum Detektieren einer Schwingung des Vibrationsresonators 10 wird mindestens ein Piezoelement 11 werwendet, das über eine Zweidrahtleitung 12, 13 an Komponenten der Schaltung angeschlossen ist. Durch Kompensation eines Piezo-Umladestromes des Piezoelements 11 kann die mechanische Schwingung des Vibrationsresonators 10 direkt abgegriffen werden.

Fig. 1 zeigt dabei nur die prinzipielle Funktion eines Verfahrens zum Steuern und Auswerten in einer solchen Vorrichtung. Das Piezoelement 11 ist über die erste seiner Leitungen 12 an einem Puffer 14 angeschlossen. Der Eingang des Puffers 14 liegt an einem ersten Knoten A an. Der zweite Leiter 13 führt vom Piezoelement 11 zu einem zweiten Knoten G. In einer dazu parallel geschalteten Anordnung sind zwischen den ersten Knoten A und den zweiten Knoten G in Reihe ein Inverter 15 und eine kapazitive Einrichtung 2 als eine Kompensationskapazität geschaltet. Die Kompensationskapazität ist hier prinzipiell als verstellbarer Kondensator ausgeführt, der zur Einstellung seiner wirksamen Kapazität einen Steuereingang aufweist. Der zweite Knoten G ist somit zwischen einerseits die Piezo- und ggfs. Leitungskapazität und andererseits die Kompensationskapazität des Kompensationskondensators 2 geschaltet. An den zweiten Knoten G ist eine Messeinrichtung 17 angeschlossen, welche zur Bestimmung der Piezokapazität eingerichtet ist. Von der Messeinrichtung 17 führt eine Leitung zum Steuereingang des Kompensationskondensators 2, um diesen anzusteuern. Außerdem ist zwischen dem zweiten Punkt G, der einen Ausgang des Piezoeiements 11 repräsentiert, und den ersten Punkt A, der einen Eingang des Piezoelements 11 repräsentiert, eine Anordnung aus einem Verstärker 18, einem Filter 19 und einem Komparator 20 in Reihe geschaltet.

Die Kompensation einer Piezo- und Leitungskapazität erfolgt durch den zum Zweig mit dem Piezoelement 11 parallelen Zweig, in dem das Ansteuersignal am ersten Punkt A invertiert auf eine Kompensationskapazität von möglichst exakt der gleichen Größe wie der der Piezo- und Leitungskapazität aufgeschaltet wird. Zwischen Piezo- und Kompensationskapazität ist dann an dem zweiten Punkt G ein kompensiertes Signal abgreifbar, das nur noch einen Anteil der mechanischen Schwingung in Form einer Sinusschwingung enthält. Die Spannung, die durch das Umladen des Piezoelements 11 entsteht, wird so kompensiert. Eine Schwierigkeit besteht darin, die Piezokapazität zu messen, ohne dass dabei die Schwingung des Vibrationsresonators 10 unterbrochen wird. Des weiteren soll die Kompensationskapazität so exakt wie möglich nachgerührt werden. Dabei soll die verstellbare Kompensationskapazität 2 durch eine nachbildende elektronische Schaltung ersetzt werden.

Für diese Problematik bietet die Schaltung in Fig, 2 eine Lösung. Beschrieben werden nachfolgend zur Vereinfachung im Wesentlichen nur Komponenten, welche der Schaltung gemäß Fig. 1 hinzugefügt oder dem gegenüber geändert sind.

zwischen den ersten Punkt A und das Piezoelement 11 ist ein erster Addierer 21 geschaltet, dessen Ausgang einen vierten Punkt bildet. Außerdem ist zwischen den ersten Punkt A und einen weiteren Eingang des ersten Addierers 21 ein Frequenzteiler 22 geschaltet. Der Ausgang des Frequenzteilers 22 bildet einen dritten Punkt B, an den außerdem ein Eingang eines zweiten Addierers 23 geschaltet ist. An einem zweiten Eingang des zweiten Addierers 23 liegt der erste Knoten A an. Der zweite Addierer 23 weist einen Steuereingang auf. Ein invertierter Ausgang des zweiten Addierers 23 ist an den Eingang des Kompensationskondensators 16 angelegt. Der Ausgang des zweiten Addierers 23 bildet einen fünften Punkt F aus.

An den zweiten Punkt G ist über eine ohmsche und eine weitere kapazitive Einrichtung 24 eine Schalteinrichtung 25 angeschlossen, welche als ein Synchrongleichrichter das Signal des zweiten Punkts G an wahlweise einen Masseanschluss oder einen negativen Eingang einer Kompensationsspannungsregelung 27 anlegt. Außerdem ist der negative Eingang der Kompensationsspannungsregelung 27 über eine weitere kapazitive Einrichtung 26 an den Masseanschluss bzw. eine Basisspannung angeschlossen. Der positive Eingang der Kompensationsspannungsregelung 27 ist ebenfalls an den Masseanschluss angelegt. Ein Ausgang der Kompensationsspannungsregelung 27 ist als Steuersignal an den zweiten Addierer 23 angelegt. An einem Schalteingang der Schalteinrichtung 25 liegt ein Signal des dritten Punkts B an.

Durch Frequenzteilung f/n wird aus der Antriebsspannung des ersten Punkts A eine zweite Spannung, als Kapazitätsmessspannung am dritten Punkt B erzeugt. Beispielsweise wird ein Teilerverhältnis von einem Viertel der Frequenz f/4 gewählt. Die Kapazitätsmessspannung am dritten Punkt B wird durch Addition der Antriebsspannung am ersten Punkt A überlagert, so dass eine überlagerte Spannung am vierten Punkt E entsteht. Auf gleiche Weise wird in einem zweiten Zeig eine invertierte Spannung am fünften Punkt F erzeugt. Diese Spannung ist in der Amplitude verstellbar, wodurch eine verstellbare Kompensationskapazität nachgebildet werden kann. Der Kompensationskondensator 16 selbst bleibt dabei konstant, wobei über die Höhe der Spannung die Ladungsmenge verändert wird, welche der Kompensationskondensator 16 speichern kann. Mit den beiden Spannungen, der überlagerten und der überlagerten invertierten Spannung am vierten bzw. am fünften Punkt E und F werden das Piezoelement 11 und der in Reihe geschaltete Kompensationskondensator angesteuert. Bei exakter Kompensation der Umladeströme, kompensieren sich die Umladespannungen am zweiten Punkt G zwischen beiden Kapazitäten. An dieser Stelle tritt somit nur die mechanische Resonanzschwingung des Vibrationsresonators 10 auf. Die Frequenz der Kapazitätsmessspannung am dritten Punkt B liegt außerhalb der mechanischen Resonanz des Vibrationsresonators 10. Mit Hilfe dieser Kapazitätsmessspannung am dritten Punkt B wird die Piezokapazität mit der Kompensationskapazität verglichen. Bei exakter Kompensation ist die Spannung für diese Frequenz an dem zweiten Punkt G zwischen den Kapazitäten gleich Null. Bei einer Fehlkompensation entsteht an diesem zweiten Punkt G eine Fehlerspannung.

Diese Fehlerspannung lässt sich mit Hilfe des Synchrongleichrichters auswerten, der durch die Schalteinrichtung 25 als eine Messeinrichtung ausgebildet wird. Da die mechanische Resonanzschwingung des Vibrationsresonators 10 ein Vielfaches von der Kapazitätsmessspannung B ist, mit welcher der Synchrongleichrichter angesteuert wird, wird nach der Gleichrichtung eine Spannung erhalten, die nur von der Piezo- und Kompensationskapazität abhängig ist. Über eine Regelschleife wird die Höhe einer Kompensationsspannung UK, mit der der Kompensationskondensator 16 angesteuert wird, an dem Spannungsausgang mit der invertierten Spannung, d.h. am fünften Punkt F so verändert, dass die Umladespannung an dem zweiten Punkt G zwischen den Kapazitäten null bleibt. Auf diese Art und Weise können Piezokapazitäten bis zur Höhe des Kompensationskondensators 16 kompensiert werden, weshalb der Kompensationskondensator 16 genügend groß zu wählen ist. Da der Kompensationskondensator 16 selbst nicht verändert wird, ist die Regelspannung ein direktes Maß für die Größe der-Piezokapazität.

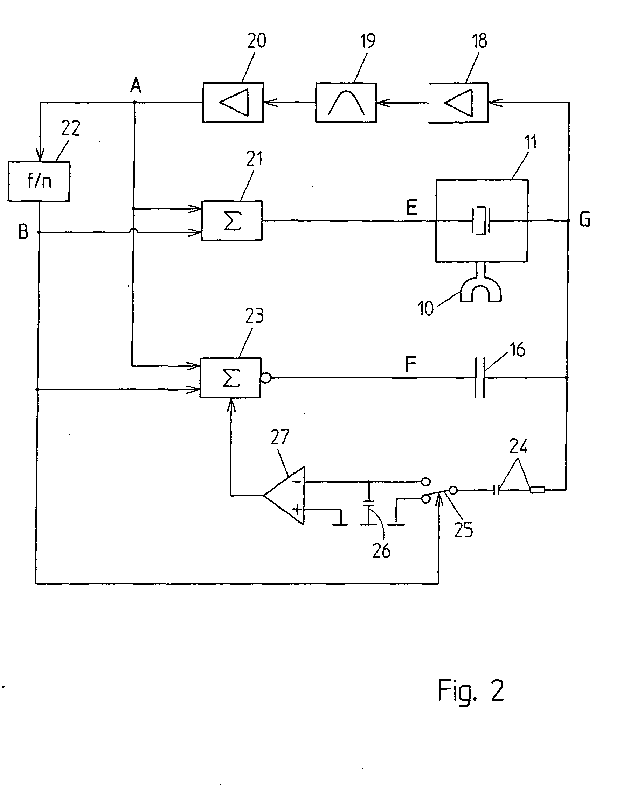

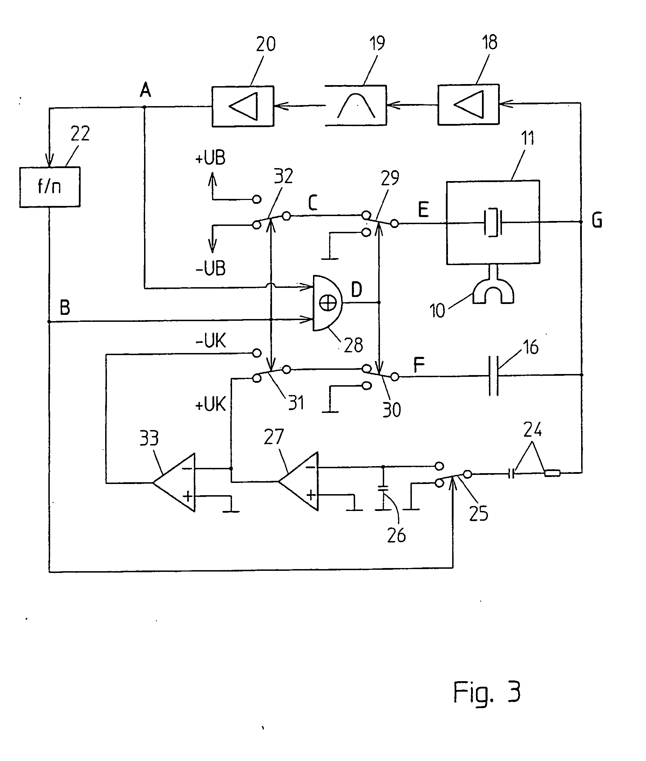

Eine praktische Ausführungsform mit Signalverläufen an verschiedenen Punkten der Schaltung bei Durchführung des bevorzugten Verfahrens zeigt Fig. 3. Der erste Punkt A mit der Antriebsspannung und der Ausgang des Frequenzteilers 22, d.h. der dritte Punkt B, sind an Eingänge eines EXOR-Gatters 28 (E-XOR: exclusiv-oder) angeschlossen. Dessen Ausgang bildet einen sechsten Punkt D, der ein Schaltsignal an eine zweite und dritte Schalteinrichtungen 29, 30 anlegt. Außerdem ist das Signal am dritten Punkt B als Schaltsignal dem Synchrongleichrichter 25 angelegt. Dieser und weitere Komponenten sind wie bei Fig. 2 zwischen den zweiten Punkt G und die Kompensationsspannungsregelung 27 geschaltet.

Der Ausgang der Kompensationsspannungsregelung 27 ist als positive Kompensationsspannung +UK einem Schalteingang einer vierten Schalteinrichtung 31 angelegt. Der Ausgang der Kompensationsspannungsregelung 27 ist außerdem einem negativen Eingang einer Kompensationsspannungsinvertierung 33 angelegt, deren zweiter negativer Eingang am Masseanschluss anliegt. Der Ausgang der Kompensationsspannungsinvertierung 33 liegt als negative Kompensationsspannung -UK der vierten Schalteinrichtung 31 an. Der geschaltete Ausgang der vierten Schalteinrichtung 31 liegt am ersten Schalteingang der dritten Schalteinrichtung 30 an. Der Ausgang der dritten schalteinrichtung 30 liegt am fünften Knoten F an, der den Eingang für den Kompensationskondensator 16 bildet. Dieser ist wiederum über den zweiten Punkt G mit dem Piezoelement 11 verbunden.

Der Eingang des Piezoelements 11 bildet den vierten Punkt E, der am Ausgang der zweiten Schalteinrichtung 29 anliegt. Ein erster Eingang der zweiten Schalteinrichtung 29 ist entsprechend gleich dem Schalteingang der dritten Schalteinrichtung 30 geschaltet, welcher an der vierten Schalteinrichtung 31 anliegt. Die beiden anderen Schalteingänge der zweiten und der dritten Schalteinrichtung 29, 30 liegen am Masseanschluss an. Der erste Schalteingang der zweiten Schalteinrichtung 29 bildet einen siebten Punkt und liegt an einem Ausgang einer fünften Schalteinrichtung 32 an. Deren Schalteingänge liegen an einer positiven bzw. negativen Betriebsspannung +UB, -UB an. An Schaltanschlüssen der vierten und der fünften Schalteinrichtung 31, 32 liegt das Signal des dritten Punkts B an.

Die Spannungen am vierten Punkt E und am fünften Punkt F werden entsprechend über die zweite bis fünfte Schalteinrichtung 29 - 32 als Schalter und das EXOR-Gatter 28 erzeugt.

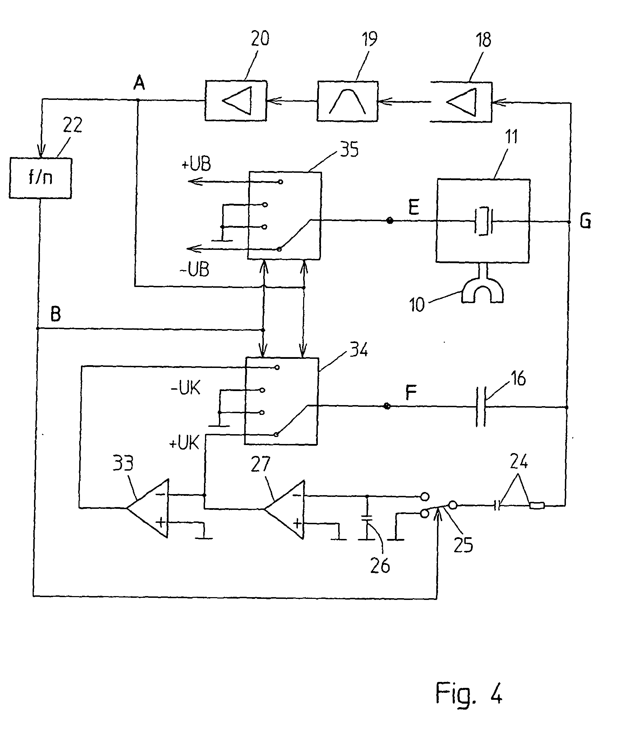

Fig. 4 zeigt eine weitere zweckmäßige Ausführungsform der Schaltungsanordnung, wobei nachfolgend nur die gegenüber der Ausführungsform gemäß Fig. 3 verschiedenen Komponenten und Funktionen beschrieben werden. Anstelle des EXOR-Gatters 28 und der Schalteinrichtungen 29 - 32 gemäß Fig. 3 sind ein erster und ein zweiter Multiplexer 34, 35 in der Schaltung eingesetzt. Die Signalformen am vierten Punkt E und am fünften Punkt F werden somit über Analogmultiplex-Bausteine erzeugt.

Der erste Punkt A mit der Antriebsspannung ist an einen Schalteingang des ersten Multiplexers 34 und an einen Schalteingang des zweiten Multiplexers 35 angeschlossen. Außerdem ist der dritte Punkt B mit dem Signal des Frequenzteilers 22 an einen weiteren Schalteingang des ersten Multiplexers 34 und an einen weiteren Schalteingang des zweiten Multiplexers 35 angeschlossen.

Der Ausgang der Kompensationsspannungsregelung 27 ist als positive Kompensationsspannung +UK einem Signaleingang des ersten Multiplexers 34 angelegt. Der Ausgang der Kompensationsspannungsregelung 27 ist außerdem einem negativen Eingang der Kompensationsspannungsinvertierung 33 angelegt, deren zweiter negativer Eingang am Masseanschluss anliegt. Der Ausgang der Kompensationsspannungsillvertierung 33 liegt als negative Kompensationsspannung -UK einem weiteren Signaleingang des ersten Multiplexers 34 an. Zwei weitere Signaleingängen des ersten Multiplexers 34 liegen am Masseanschluss an. Der geschaltete Ausgang des ersten Multiplexers 34 liegt am fünften Punkt F an, der den Eingang für den Kompensationskondensator 16 bildet. Dieser ist wiederum über den zweiten Punkt G mit dem Piezoelement 11 verbunden.

Der Eingang des Piezoelements 11 bildet wieder den vierten Punkt E, der bei dieser Ausführungsform am Ausgang des zweiten Multiplexers 35 anliegt. Ein erster und ein vierter Signaleingang des zweiten Multiplexers 35 liegen an einer positiven bzw, an einer negativen Betriebsspannung +UB, -UB an. Eine zweiter und ein dritter Signaleingang des zweiten Multiplexers 35 liegen am Masseanschluss an.

Durch die Möglichkeit, die Piezokapazität sehr genau zu messen, ergeben sich weitere Vorteile. Ein Leitungsbruch und ein Kurzschluss der Leitungen zum Vibrationssensor lassen sich dadurch sicher detektieren. Des weiteren kann eine Veränderung der Piezokapazität auf eine Beschädigung des Piezoelements 11 hinweisen.

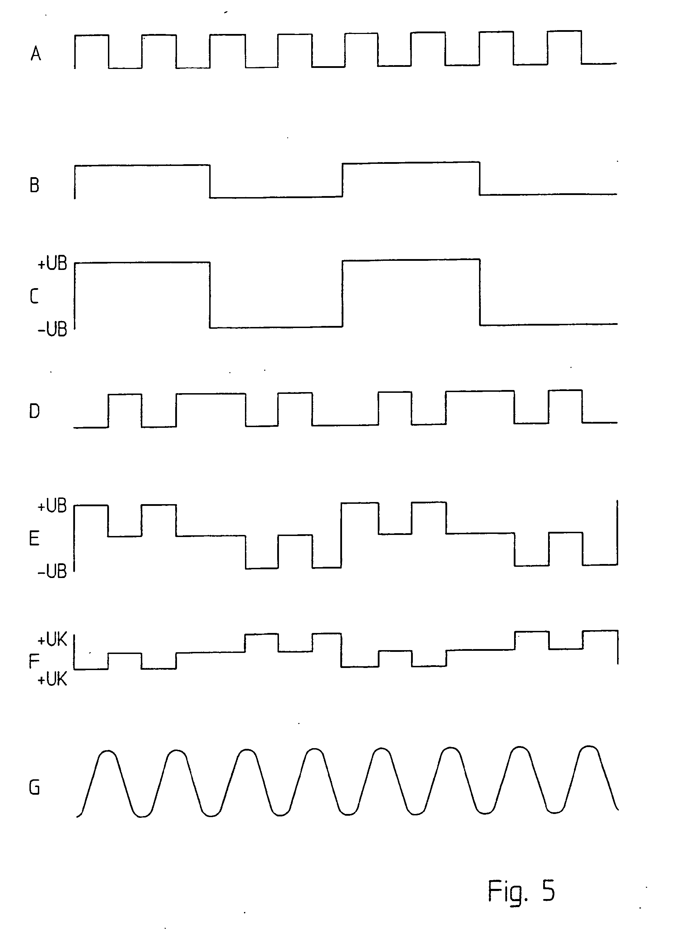

Fig. 5 zeigt Spannungs- bzw. Signalverläufe an den verschiedenen Punkten zueinander in einer beispielhaften zeitlichen Abfolge. Am ersten Punkt A liegt als Antriebsspannung ein einfaches getaktetes Signal an, dessen Frequenz im Normalbetrieb dem der mechanischen Resonanzschwingung des Vibrationsresonators entspricht. Am frequenzgeteilten dritten Punkt B liegt ein Takt an, der eine Periode mit der Dauer von vier Perioden des Antriebssignals am Punkt A hat. Am siebten Punkt C liegt eine getaktete Spannung in Höhe der Betriebsspannung +UB, -UB an, wobei der Takt dem des Signals am dritten Punkt B entspricht. Am sechsten Punkt D liegt ein getaktet geschaltetes Signal, das durch eine EXOR-Verknüpfung aus den Signalen A und B der Fig. 5 gewonnen wird. Signalverläufe am vierten und am fünften Punkt E, F sind zueinander invers verlaufend und hängen von der Höhe der Betriebsspannung +UB, -UB bzw. der Kompensationsspannung -UK, +UK ab. Diese Signale wechseln den getakteten Zustand parallel zu dem Zustand des Signals am sechsten Punkt D und zusätzlich zum Ende einer Periode des Signals am dritten Punkt B. Am zweiten Punkt G liegt ein sinusförmiges Ausgangssignal des Piezoelements 11 an, welches ein kompensiertes Messsignal des Piezoelements 11 ausbildet und der Resonanzschwingung des Vibrationsresonators entspricht.

Alternativ dazu sind weitere Ausführungsformen umsetzbar.

Zur Abdeckung eines größeren Kompensationsbereichs ist es beispielsweise möglich, mit einem Analogschalter zwischen verschiedenen Kompensationskondensatoren umzuschalten und nur die Feinabstimmung durch Verändern der Kompensationsspannung durchzuführen. Ein Vorteil dieses Verfahrens besteht darin, dass zum Antrieb immer die maximale Spannung zur Verfügung steht. Eine Kompensation von kleinen Piezokapazitäten mit einem großen Kompensationskondensator hat durch die kleine Kompensationsspannung auch eine kleinere Umladespannung zur Folge.

Beispielsweise ist es auch möglich, die Kapazitätsmessspannung nicht durch Frequenzteilung aus der Antriebsspannung zu erzeugen, sondern eine feste Frequenz, die z.B. von einem Microprozessor kommt, einzuspeisen. Allerdings sollte bei dieser Variante für die Zeit der Kapazitätsmessung die Schwingung auf der mechanischen Resonanz unterbrochen werden, da sonst Schwebungen mit sehr niedrigen Frequenzen entstehen können. Eine Unterbrechung der mechanischen Schwingung würde die Reaktionszeit des Geräts erhöhen.

### Bezugszeichenliste:

- 1: vibrations-Füllstand-Grenzschalter
- 2: verstellbare Kompensationskapazität
- 3: sendendes Piezoelement
- 4: empfangendes Piezoelement
- 5: Verstärker
- 6: Filter
- 7: Komparator
- 10: Vibrationsresonator
- 11: Piezoelement
- 12: erster Leiter zu 11
- 13: zweiter Leiter von 11
- 14: Puffer
- 15: Inverter
- 16: Kondensator der Nachbildung
- 17: Messeinrichtung
- 18: Verstärker
- 19: Filter
- 20: Komparator
- 21: erster Addierer
- 22: Frequenzteiler
- 23: Addierer der Nachbildung
- 24: ohmsche und kapazitive Einrichtung
- 25: Synchrongleichrichter / erste Schalteinrichtung
- 26: kapazitive Einrichtung
- 27: Kompensationsspannungsregelung
- 28: EXOR-Gatter
- 29 - 32: zweite bis fünfte Schalteinrichtung
- 33: Kompensationsspannungsinvertierung
- 34, 35: erster und zweiter Multiplexer
- A: erster Punkt / Antriebsspannung
- B: dritter Punkt / Kapazitätsmessspannung
- C: siebter Punkt
- D: sechstr Punkt
- E: vierter Punkt
- F: fünfter Punkt / invertierte bzw. Kompensationsspannung
- G: zweiter Punkt / kompensiertes Signal

## Patentansprüche

1. Vorrichtung zur Vibrations-Füllstand-Grenzstanderfassung mit
- einem Vibrationsresonator (10),
- mindestens einem Piezoelement (11), das mit einer Piezokapazität behaftet ist, zum Anregen des Vibrationsresonators (10) mit einer Antriebsspannung (A) einer Antriebsfrequenz (f) zu einer Schwingung und zum Erfassen einer Schwingung des Vibrationsresonators (10),
- zwei Anschluss-Leitern (12, 13) des Piezoelements (11),
- Schaltungskomponenten (18 - 20) zum Auswerten einer durch das Piezoelement (11) erfassten Schwingung des Vibrationsresonators (10),
- einer Parallelschaltung aus einem Zweig mit einem Kompensationskondensator (2) und einem Zweig mit dem Piezoelement (11) zum Kompensieren eines von der Piezokapazität abhängigen Umladestroms des Piezoelements (11), wobei ausgangsseitig ein kompensiertes Signal (G) abgreifbar ist,
**gekennzeichnet durch**
- einen Frequenzteiler (22), zum Teilen der Antriebsfrequenz (f) der Antriebsspannung (A), der ausgangsseitig eine Kapazitätsmessspannung (B) bereitstellt,
- einen ersten Addierer (21) zum Addieren der Antriebsspannung (A) und der Kapazitätsmessspannung (B), wobei die am Ausgang des ersten Addierers (21) anliegende überlagerte Spannung (E) dem Piezoelement (11) zugeführt ist,
- einen zweiten Addierer (23) zum Addieren der der Antriebsspannung (A) und der Kapazitätsmessspannung (B), wobei der zweite Addierer (23) einen invertierten Ausgang besitzt, dessen Spannung in ihrer Amplitude verstellbar ist und ein invertierter Ausgang des zweiten Addierers (23) dem Kompensationskondensator (2) zugeführt ist und
- einen Synchrongleichrichter (25), dem das kompensierte Signal (G) eingangsseitig angelegt und dem die Kapazitätsmessspannung (B) als Steuersignal zugeführt ist, wobei ein Ausgang dem zweiten Addierer (23) als Steuersignal zur Verstellung der Amplitude angelegt ist.

2. Vorrichtung nach Anspruch 1, bei welcher der Kompensationskondensator (2) zum Kompensieren des von der Piezokapazität und zusätzlich einer Leitungskapazität des Piezoelements (11) abhängigen Umladestroms ausgelegt ist.

3. Vorrichtung nach einem der vorstehenden Ansprüche, bei welcher die Kapazität von der gleichen Größe wie die Piezokapazität oder die Summe aus Piezo- und Zuleitungskapazität als Kompensationskondensator (2) aufgeschaltet wird.

4. Vorrichtung nach einem der vorstehenden Ansprüche, wobei das kompensierte Signal (G) zwischen dem Piezoelement (11) und dem Kompensationskondensator (2) nur noch den Anteil der mechanischen Schwingung des Vibrationsresonators (10) enthält.

5. Verfahren zur Vibrations-Füllstand-Grenzstanderfassung bei dem
- mindestens ein Piezoelement (11), das mit einer Piezokapazität behaftet ist, einen Vibrationsresonator (10) mit einer Antriebsspannung (A) einer Antriebsfrequenz (f) zu einer Schwingung anregt und eine Schwingung des Vibrationsresonators (10) erfasst, wobei
- mittels eines parallel zu einem ersten Zweig mit dem Piezoelement (11) geschalteten zweiten Zweigs mit einer Kompensationskapazität ein von der Piezokapazität abhängiger Umladestrom des Piezoelements (11) kompensiert wird
**gekennzeichnet durch** die Schritte:
- aus der Antriebsspannung (A) der Antriebsfrequenz (f) wird durch Frequenzteilung eine Kapazitätsmessspannung (B) erzeugt,
- die Antriebsspannung (A) und die Kapazitätsmessspannung (B) werden zu einer überlagerten Spannung (E) addiert und dem Piezoelement (11) zugeführt,
- die die Antriebsspannung (A) und die Kapazitätsmessspannung (B) werden addiert, invertiert und amplituden verstellt dem Kompensationskondensator zugeführt, wobei die Amplituden verstellung **dadurch** erfolgt, dass ein kompensiertes Signal (G) zwischen dem ersten und dem zweiten Zweig mit der Frequenz der Kapazitätsmessspannung (B) abgetastet und zur Steuerung verwendet wird.

6. Verfahren nach Anspruch 5, bei welchem zusätzlich zu der Piezokapazität eine Leitungskapazität des Piezoelements (11) kompensiert wird.

7. Verfahren nach einem der Ansprüche 5 oder 6, bei welchem eine Kompensationskapazität von der gleichen Größe wie die der Piezokapazität oder einer Piezo- und Leitungskapazität als Kompensationskondensator (2) aufgeschaltet wird.

8. Verfahren nach einem der Ansprüche 5 bis 7, bei welchem zwischen dem Piezoelement (11) und einem Kompensationskondensator (2) mit der Kompensationskapazität ein kompensiertes Signal (G) abgegriffen wird, das nur noch den Anteil der mechanischen Schwingung des Vibrationsresonators (10) enthält.

9. Verfahren nach einem der Ansprüche 5 bis 8, bei welchem eine Kompensationskapazität eines Kompensationskondensators (2) variabel einstellbar und regelbar ist.

10. Verfahren nach einem der Ansprüche 5 bis 9, bei welchem an einen Kompensationskondensator (2) eine geregelte Spannung angelegt wird.

## Claims

1. An apparatus for vibrational detection of the filling level limit with
- a vibrational resonator (10),
- at least one piezo element (11) which is associated with a piezo capacity, for exciting the vibration resonator (10) with a drive voltage (A) of a drive frequency (f) to an oscillation and for detecting an oscillation of the vibration resonator (10),
- two terminal leads (12, 13) of the piezo element (11),
- circuit components (18 to 20) for evaluating an oscillation of the vibration resonator (10) detected by the piezo element (11),
- a parallel circuit comprising a branch with a compensation capacitor (2) and a branch with the piezo element (11) for compensating a re-charging current of the piezo element (11) dependent upon the piezo capacity, wherein a compensated signal (G) is capable of being picked up at the output, **characterized by**
- a frequency divider (22) for dividing the drive frequency (f) of the drive voltage (A), which frequency divider (22) makes a capacity measurement voltage (B) available at the output side,
- a first adder (21) for adding the drive voltage (A) and the capacity measurement voltage (B), wherein the superimposed voltage (E) applied at the output of the first adder (21) is fed to the piezo element (11),
- a second adder (23) for adding the drive voltage (A) and the capacity measurement voltage (B), wherein the second adder (23) has an inverted output, the voltage of which is adjustable in its amplitude and an inverted output of the second adder (23) is fed to the compensation capacitor (2), and
- a synchronous rectifier (25) to which the compensated signal (G) is applied at the input side and to which the capacity measurement voltage (B) is fed as a control signal, wherein an output is applied to the second adder (23) as a control signal in order to adjust the amplitude.

2. An apparatus according to claim 1, in which the compensation capacitor (2) is designed in order to compensate the re-charging current dependent upon the piezo capacity and, in addition, a line capacity of the piezo element (11).

3. An apparatus according to one of the preceding claims, in which the capacity is switched on from the same magnitude as the piezo capacity or the sum of the piezo capacity and the feed line capacity as the compensation capacitor (2).

4. An apparatus according to any one of the preceding claims, wherein the compensated signal (G) between the piezo element (11) and the compensation capacitor (2) contains only the portion of the mechanical oscillation of the vibration resonator (10).

5. A method of detecting the vibration filling level limit level in which
- at least one piezo element (11) which is associated with a piezo capacity, excites a vibration resonator (10) with a drive voltage (A) of a drive frequency (f) to an oscillation and detects an oscillation of the vibration resonator (10), wherein
- a re-charging current of the piezo element (11) dependent upon the piezo capacity is compensated by means of a second branch with a compensation capacity connected parallel to a first branch with the piezo element (11),
**characterized by** the steps:
- a capacity measurement voltage (B) is produced from the drive voltage (A) of the drive frequency (f) by frequency division,
- the drive voltage (A) and the capacity measurement voltage (B) are added to form a superimposed voltage (E) and are fed to the piezo element (11),
- the drive voltage (A) and the capacity measurement voltage (B) are added, inverted and fed to the compensation capacitor with their amplitudes adjusted, wherein the amplitude adjustment is carried out in such a way that a compensated signal (G) between the first branch and the second branch with the frequency of the capacity measurement voltage (B) is scanned and is used for measurement purposes.

6. A method according to claim 5, in which, in addition to the piezo capacity, a line capacity of the piezo element (11) is compensated.

7. A method according to one of claims 5 or 6, in which a compensation capacity is switched on from the same magnitude as that of the piezo capacity or a piezo capacity and feed line capacity as the compensation capacitor (2).

8. A method according to any one of claims 5 to 7, in which a compensated signal (G), which contains only the portion of the mechanical oscillation of the vibration resonator (10), is picked up between the piezo element (11) and a compensation capacitor (2).

9. A method according to any one of claims 5 to 8, in which a compensation capacity of a compensation capacitor (2) is capable of being set and regulated in a variable manner.

10. A method according to any one of claims 5 to 9, in which a regulated voltage is applied to a compensation capacitor (2).

## Revendications

1. Dispositif de détection du niveau de remplissage limite par vibrations comprenant :
- un résonateur vibrant (10),
- au moins un élément piézo-électrique (11) ayant une capacité piézoélectrique pour exciter le résonateur vibrant (10) avec une tension d'entraînement (A), une fréquence d'entraînement (f) pour le faire osciller et pour saisir l'oscillation du résonateur vibrant (10),
- deux conducteurs de branchement (12, 13) de l'élément piézo-électrique (11),
- des composants de circuit (18-20) pour exploiter une oscillation du résonateur vibrant (10) saisie par l'élément piézo-électrique (11),
- un montage en parallèle formé d'une branche comportant un condensateur de compensation (2) et une branche avec un élément piézo-électrique (11) pour compenser le courant de transfert de charge de l'élément piézo-électrique (11) en fonction de la capacité piézo-électrique,
* et détectant en sortie un signal compensé (G),
dispositif **caractérisé en ce qu'**il comprend :
- un diviseur de fréquence (22) pour diviser la fréquence d'entraînement (f) de la tension d'entraînement (A) qui fournit en sortie une tension de mesure capacitive (B),
- un premier additionneur (21) pour additionner la tension d'entraînement (A) et la tension mesurée de la capacité (B),
* la tension combinée (E) à la sortie du premier additionneur (21), étant appliqué à l'élément piézo-électrique (11).
- un second additionneur (23) pour additionner la tension d'entraînement (A) et la tension de mesure capacitive (B),
* le second additionneur (23) ayant une sortie inversée dont la tension est réglable en amplitude et la sortie inversée du second additionneur (23) est appliquée au condensateur de compensation (2), et
- un redresseur synchrone (25) ayant en entrée le signal compensé (G) et recevant comme signal de commande, la tension de mesure capacitive (B),
* la sortie du second additionneur (23) étant appliquée comme signal de commande pour régler l'amplitude.

2. Dispositif selon la revendication 1,
**caractérisé en ce que**
le condensateur (2) est conçu pour compenser le courant de transfert de charge dépendant de la capacité piézo-électrique et en plus d'une capacité de conducteur de l'élément piézo-électrique (11).

3. Dispositif selon l'une des revendications précédentes,
**caractérisé en ce que**
la capacité de la même grandeur que la capacité piézo-électrique ou la somme de la capacité piézo-électrique et de celle du conducteur d'alimentation est appliquée comme condensateur de compensation (2).

4. Dispositif selon l'une des revendications précédentes,
**caractérisé en ce que**
le signal compensé (G) entre l'élément piézo-électrique (11) et le condensateur de compensation (2), ne comporte plus qu'une fraction des oscillations mécaniques du résonateur vibrant (10).

5. Procédé de détection par vibrations du niveau limite de remplissage selon lequel :
- au moins un élément piézo-électrique (11) ayant une capacité piézo-électrique excite un résonateur vibrant (10) avec une tension de sortie (A), une fréquence d'entraînement (f) pour le faire osciller et détecte une oscillation du résonateur vibrant (10),
selon lequel
- à l'aide d'une seconde branche en parallèle à la première branche avec l'élément piézo-électrique (11) et ayant une capacité de compensation, on compense un courant de transfert de charge de l'élément piézo-électrique (11) dépendant de la capacité piézo-électrique,
procédé **caractérisé par** les étapes suivantes :
- à partir de la tension d'entraînement (A) de la fréquence d'entraînement (f), on génère une tension de mesure de capacité (B) par division de fréquence,
- on additionne la tension d'entraînement (A) et la tension de mesure de la capacité (B) pour avoir une tension combinée (E) que l'on applique à l'élément piézo-électrique (11),
- on additionne la tension d'entraînement (A) et la tension de mesure de capacité (B), on inverse et on décale les amplitudes pour les fournir au condensateur de compensation,
* le décalage des amplitudes consistant en ce qu'on détecte un signal compensé (G) entre la première et la seconde branche à la fréquence de la tension de mesure de capacité (B) et on l'utilise pour la commande.

6. Procédé selon la revendication 5,
**caractérisé en ce qu'**
en plus de la capacité piézo-électrique, on compense la capacité de ligne de l'élément piézo-électrique (11).

7. Procédé selon l'une des revendications 5 ou 6,
**caractérisé en ce qu'**
comme condensateur de compensation (2), on applique une capacité de compensation de même amplitude que la capacité piézo-électrique ou une capacité piézo-électrique et une capacité de ligne.

8. Procédé selon l'une des revendications 5 à 7,
**caractérisé en ce qu'**
on détecte un signal compensé (G) entre l'élément piézo-électrique (11) et un condensateur de compensation (2) avec la capacité de compensation, ce signal ne contenant plus qu'une fraction de l'oscillation mécanique du résonateur vibrant (10).

9. Procédé selon l'une des revendications 5 à 8,
**caractérisé en ce qu'**
on règle de manière variable et on régule la capacité de compensation d'un condensateur de compensation (2).

10. Procédé selon l'une des revendications 5 à 9,
**caractérisé en ce qu'**
on applique une tension régulée à un condensateur de compensation (2).
